# EUROPÄISCHE PATENTSCHRIFT

(11) **EP 2 681 076 B1**
(45) Veröffentlichungstag und Bekanntmachung des Hinweises auf die Patenterteilung: **22.04.2020**
(21) Anmeldenummer: 12707504.2
(22) Anmeldetag: 24.02.2012
(51) Int. Cl.: B60Q 1/08, G06K 9/00

(54) **VERFAHREN UND STEUERGERÄT ZUM BEEINFLUSSEN EINER BELEUCHTUNGSSZENE VOR EINEM FAHRZEUG**
METHOD AND CONTROL UNIT FOR INFLUENCING AN ILLUMINATION SCENE IN FRONT OF A VEHICLE
PROCÉDÉ ET DISPOSITIF DE COMMANDE DESTINÉS À INFLUER SUR UNE SCène D'ÉCLAIRAGE DEVANT UN VÉHICULE

(30) Priorität: 02.03.2011 DE 102011004937
(43) Veröffentlichungstag der Anmeldung: 08.01.2014
(73) Patentinhaber: Robert Bosch GmbH, 70442 Stuttgart (DE)
(72) Erfinder: FABER, Petko, 71272 Renningen (DE); SCHWARZENBERG, Gregor, 75365 Calw (DE)
(86) Internationale Anmeldenummer: PCT/EP2012/053154
(87) Internationale Veröffentlichungsnummer: WO 2012/116931

(56) Entgegenhaltungen:
- EP-A1- 1 780 462
- EP-A1- 2 147 823
- EP-A1- 2 275 305
- DE-A1-102009 051 485
- US-A1- 2011 012 511
- US-B2- 7 415 338

## Beschreibung

### Stand der Technik

Die vorliegende Erfindung bezieht sich auf ein Verfahren zum Beeinflussen einer Beleuchtungsszene vor einem Fahrzeug, auf ein entsprechendes Steuergerät sowie auf ein entsprechendes Computerprogrammprodukt gemäß den Hauptansprüchen.

Bei einer herkömmlichen Lichtsteuerung kann eine Lichtverteilung vor einem Fahrzeug entweder manuell oder automatisch zwischen z.B. Abblendlicht und Fernlicht umgeschaltet werden. Dadurch kann eine Strahlform des von dem Fahrzeug ausgesandten Lichts zwischen verschiedenen Zuständen verändert werden. Mit dem Abblendlicht wird eine asymmetrische Fläche vor dem Fahrzeug ausgeleuchtet. Ein rechter Rand der ausgeleuchteten Fläche wird bei Rechtsverkehr von den Scheinwerfern über eine größere Entfernung vor dem Fahrzeug erhellt, als ein linker Rand der ausgeleuchteten Fläche. Das ausgesandte Licht ist stark gebündelt und weist eine stark ausgeprägte Hell-Dunkelgrenze an einer straßenabgewandten Kante des Lichtkegels auf. Bei Fernlicht wird von den Scheinwerfern ein weniger stark abgegrenzter Lichtkegel abgestrahlt. Der Lichtkegel des Fernlichts erhellt einen größeren Anteil eines Fahrersichtfelds als das Abblendlicht. Zur Vermeidung einer Blendung von Gegenverkehr kann ein Winkel der Lichtkegel, insbesondere des Abblendlichts an eine Beladungssituation des Fahrzeugs angepasst werden. Dazu können die Scheinwerfer oder Teile davon manuell oder motorisch in einem Höhenwinkel verstellt werden. Dadurch verändert sich eine Leuchtweite des Abblendlichts. Manche Scheinwerfer sind mit einem Seitenwinkel an einen Lenkwinkel des Fahrzeugs gekoppelt, um bei einem Lenkeinschlag mit den Scheinwerfern in eine Kurve leuchten zu können. Dabei wird der gesamte Strahl geschwenkt.

In der DE 10 2007 034 196 A1 wird ein Verfahren für die Spurerfassung mit einem ein Sensorsystem zur Spurerkennung umfassenden Fahrerassistenzsystem eines Fahrzeugs offenbart, bei dem mit dem Sensorsystem für Spurerkennung in einem vor dem Fahrzeug liegenden Bereich eines Verkehrsraums Fahrspurmarkierungen repräsentierende Messpunkte erfasst werden. Auf Basis eines Referenzmodells wird eine ideale Anzahl von Messpunkten MP ermittelt. Aus einem Vergleich zwischen der Anzahl der tatsächlich erfassten Messpunkte und der idealen Anzahl von Messpunkten wird ein Plausibilitätsmaß der Vorausschauweite bestimmt.

Die EP 2 275 305 A1 beschreibt eine Automobillichteinheit.

Die EP 1 780 462 A1 beschreibt ein moduliertes Fahrzeugsbeleuchtungsverfahren und einen dieses Verfahren umsetzenden Scheinwerfer.

Die DE 10 2009 051 485 A1 offenbart ein Verfahren und Vorrichtung zur Steuerung eines Fahrlichts eines Fahrzeugs.

Die US 201110012511 A1 offenbart ein Fahrzeugbeleuchtungsgerät und ein Beleuchtungsverfahren.

Die US 7 415 338 B2 offenbart ein Gerät zur Steuerung einer Hilfseinrichtung eines Fahrzeugs.

Die EP 2 147 823 A1 offenbart ein Verfahren und eine Vorrichtung zum Ermitteln einer geeigneten Lichtverteilung des durch mindestens einen Frontscheinwerfer eines Fahrzeugs abgestrahlten Lichts.

### Offenbarung der Erfindung

Vor diesem Hintergrund wird mit der vorliegenden Erfindung ein Verfahren zum Beeinflussen einer Beleuchtungsszene vor einem Fahrzeug, weiterhin ein Steuergerät zum Beeinflussen einer Beleuchtungsszene vor einem Fahrzeug, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass in Fahrzeugen vermehrt eine Objekterkennung und Objektklassifizierung angewandt wird, um Informationen über ein Fahrzeugumfeld zu erhalten. Bei einem Ausleuchten eines Sichtbereichs vor dem Fahrzeug unter Verwendung von adaptiven Scheinwerfern können die gewonnenen Informationen verwendet werden, um Bereiche erkannter und klassifizierter Objekte bedarfsgerecht und klassenabhängig anzustrahlen. Beispielsweise kann zur Vermeidung einer Eigenblendung des Fahrzeuglenkers an, als reflektierend klassifizierten Objekten eine Beleuchtungsintensität durch die Scheinwerfer in Bereichen um die betroffenen Objekte reduziert werden. Ebenso kann zur Vermeidung einer Blendung von, als "andere Verkehrsteilnehmer" klassifizierten Objekten eine Beleuchtungsintensität durch die Scheinwerfer in Bereichen um die betroffenen Objekte reduziert werden.

Vorteilhafterweise kann so über den ganzen Sichtbereich gesehen ein hohes Beleuchtungsniveau erreicht werden, das bei erkannten und klassifizierten Objekten entsprechend einer Klasse eines Objekts zielgerichtet angepasst wird. Dadurch kann eine Eigensicht für den Fahrzeuglenker verbessert werden und Gefährdungspotentiale durch den Fahrzeuglenker schneller wahrgenommen werden.

Die vorliegende Erfindung schafft ein Verfahren zum Beeinflussen einer Beleuchtungsszene vor einem Fahrzeug, wobei das Verfahren einen Schritt des Einlesens einer Information über eine Position zumindest eines erkannten Objekts und über eine Klasse des erkannten Objekts umfasst. Weiterhin umfasst das Verfahren einen Schritt des Zuordnens eines auf die Position des Objekts bezogenen Beleuchtungsbereichs mit einer auf die Klasse des Objekts bezogenen Beleuchtungsstärke für den Beleuchtungsbereich. Und das Verfahren umfasst einen Schritt des Anpassens der Beleuchtungsszene unter Berücksichtigung des Beleuchtungsbereichs und der zugehörigen Beleuchtungsstärke.

Die vorliegende Erfindung schafft ferner ein Steuergerät, zum Beeinflussen einer Beleuchtungsszene vor einem Fahrzeug, wobei das Steuergerät eine Einrichtung zum Einlesen einer Information über eine Position zumindest eines erkannten Objekts und über eine Klasse des erkannten Objekts aufweist. Und das Steuergerät oder Informationssystem weist eine Einrichtung zum Zuordnen eines auf die Position des Objekts bezogenen Beleuchtungsbereichs mit einer auf die Klasse des Objekts bezogenen Beleuchtungsstärke für den Beleuchtungsbereich auf. Weiterhin weist das Steuergerät oder Informationssystem eine Einrichtung zum Anpassen der Beleuchtungsszene unter Berücksichtigung des Beleuchtungsbereichs und der zugehörigen Beleuchtungsstärke auf.

Unter einer Beleuchtungsszene kann eine an eine Fahrsituation oder einen Fahrzeugort angepasste und hinterlegte Einstellung für eine Fahrzeugbeleuchtungsanlage, insbesondere zumindest eines Frontscheinwerfers verstanden werden. Beleuchtungsszenen können beispielsweise mit selbsterklärenden Namen, wie Fernlicht oder Kreuzungslicht oder Kurvenlicht bezeichnet werden. Ein Objekt kann ein Gegenstand, wie beispielsweise ein anderes Fahrzeug, eine Straßenausstattung, ein Tier, einen Fußgänger, einen Fahrradfahrer, ein Schlagloch oder auch Nebel sein. Eine Klasse kann eine Kategorie sein, die einem Objekt aufgrund eines oder mehrerer Unterscheidungskriterien zugeordnet wird. Beispielsweise können Klassen bei Fahrzeugen nach einer Fahrerposition bzw. einer geschätzten Augenhöhe des Fahrers über der Fahrbahn unterschieden werden. Beispielsweise können Klassen bei Straßenausstattung Verkehrsbeschilderung, Fahrbahnmarkierung, Wegweisung, Leiteinrichtung, Signalisierung und Beleuchtung sein. Die Klassen können weiter unterteilt sein. Ein Beleuchtungsbereich kann eines oder mehrere der Objekte ganz oder teilweise umfassen. Der Beleuchtungsbereich kann auch einen Ausschnitt oder Teilbereich des Objekts umfassen. Beispielsweise kann der Beleuchtungsbereich eines Verkehrsschilds eine Informationsfläche des Verkehrsschildes umfassen und eine Befestigung des Schilds nicht umfassen. Beispielsweise kann der Beleuchtungsbereich bei einem Fahrzeug eine Bodenfläche um das Fahrzeug und einen bodennahen Teilbereich des Fahrzeugs umfassen. Unter einer Beleuchtungsstärke kann eine auf den Beleuchtungsbereich auftreffende Lichtstärke pro Fläche verstanden werden. Entsprechend einer weiteren Ausführungsform der vorliegenden Erfindung kann im Schritt des Einlesens eine Größe des bekannten Objekts eingelesen werden, und im Schritt des Zuordnens der Beleuchtungsbereich ferner unter Berücksichtigung der Größe des Objekts zugeordnet werden. Unter einer Größe eines Objekts kann eine projizierte Ausdehnung aus einer Fahrzeugperspektive heraus verstanden werden. Durch eine Berücksichtigung der Größe kann der Beleuchtungsbereich besser auf eine tatsächlich vom Fahrzeug aus wahrnehmbare Gestalt des Objekts angepasst werden.

Im Schritt des Zuordnens wird eine auf die Klasse des Objekts bezogene Beleuchtungsdauer zugeordnet und im Schritt des Anpassens wird die Beleuchtungsszene ferner unter Berücksichtigung der Beleuchtungsdauer angepasst. Unter einer Beleuchtungsdauer kann eine Haltezeit nach einer Veränderung des Objekts verstanden werden. Erfindungsgemäß wird ansprechend auf eine Erkennung von Wild vor dem Fahrzeug, insbesondere am Fahrbahnrand eine Stelle, an der das Wild erkannt worden ist länger ausgeleuchtet, als sich das Wild an der Stelle befindet, da beispielsweise ein weiteres Tier an der gleichen Stelle auftauchen könnte. Oder ein Verkehrsschild wird kurzzeitig verdeckt, befindet sich aber immer noch an derselben Stelle. Dann wird die Stelle weiter beleuchtet bleiben, obwohl das Verkehrsschild gerade nicht sichtbar ist. Ebenso kann eine Aufmerksamkeitsdauer als Beleuchtungsdauer verwendet werden, wenn eine Ausleuchtung eines Objekts nicht bis zu einem Passieren des Objekts mit dem Fahrzeug notwendig ist. Beispielsweise ist eine Hervorhebung von Wegweisern, die nicht in Zusammenhang mit einer geplanten Route für das Fahrzeug stehen für eine kurze Zeitspanne nur als Orientierungshilfe sinnvoll. Die Aufmerksamkeit des Fahrers soll nicht von der eigenen Fahraufgabe abgelenkt werden.

In einer zusätzlichen Ausführungsform der vorliegenden Erfindung kann im Schritt des Einlesens ferner ein vor dem Fahrzeug erkannter Fahrbahnverlauf eingelesen werden, und im Schritt des Zuordnens ein Fahrbahnbeleuchtungsbereich und eine Fahrbahnbeleuchtungsstärke auf den Fahrbahnverlauf ausgerichtet werden, wobei die Fahrbahnbeleuchtungsstärke insbesondere für einen Randbereich des Fahrbahnbeleuchtungsbereichs gegenüber einer Grundbeleuchtungsstärke der Beleuchtungsszene erhöht wird. Unter einem Fahrbahnverlauf kann ein vor dem Fahrzeug befindlicher und zeitnah zu befahrender Straßenabschnitt verstanden werden. Der Fahrbahnverlauf kann durch eine Auswertung von beispielsweise Leiteinrichtung und/oder Fahrbahnmarkierung erkannt werden. Ein Fahrbahnbeleuchtungsbereich kann den Straßenabschnitt oder Teile davon umfassen. Ebenso kann der Fahrbahnbeleuchtungsbereich zumindest einen angrenzenden Randbereich wie einen Fahrbahnrand umfassen. Eine Fahrbahnbeleuchtungsstärke kann eine hohe Lichtstärke sein, da in der Regel die Fahrbahn aus einem dunklen Material aufgebaut ist und wenig Licht zurückwirft. Eine Grundbeleuchtungsstärke kann eine in der Beleuchtungsszene hinterlegte Beleuchtungsstärke für den jeweiligen Bereich sein. Der Randbereich kann besonders hervorgehoben werden, um beispielsweise Gefahrenstellen besonders frühzeitig erkennen zu können. Durch eine vorauseilende Fahrbahnerkennung und eine vorauseilende Fahrbahnbeleuchtung kann beispielsweise eine Kurve bereits ausgeleuchtet werden, wenn das Fahrzeug einen Anfang der Kurve noch gar nicht erreicht hat.

Gemäß einer weiteren Ausführungsform der vorliegenden Erfindung kann ansprechend auf ein Erkennen eines retroreflektierenden Objekts vor dem Fahrzeug, dem retroreflektierenden Objekt im Schritt des Zuordnens ein Beleuchtungsbereich mit einer angepassten Beleuchtungsstärke, insbesondere einer gegenüber einer Grundbeleuchtungsstärke der Beleuchtungsszene reduzierten Beleuchtungsstärke zugeordnet werden. Unter einem retroreflektierenden Objekt kann beispielsweise ein Rückstrahler oder ein Katzenauge oder ein reflektierend gestaltetes Objekt, wie ein Verkehrsschild verstanden werden. Ebenso kann darunter ein reflektierendes Objekt mit einer zufälligen Reflektivität, beispielsweise eine orthogonal zu einfallendem Licht ausgerichtete Fensterfläche verstanden werden. Aufgrund eines großen Lichtausstoßes bzw. einer hohen Beleuchtungsintensität von leistungsstarken Frontscheinwerfern besteht ein hohes Eigenblendungspotential bei einer Beleuchtung des retroreflektierenden Objekts mit voller Lichtstärke. Dadurch kann die Dunkeladaption des Fahrers stark gestört werden. Durch eine Beleuchtung beispielsweise von Verkehrs- und Hinweisschildern mit einer an Umgebungsbedingungen, speziell einer Umgebungshelligkeit angepassten Lichtstärke kann eine Erkennbarkeit gewährleistet werden, ohne den Fahrer zu blenden. So kann beispielsweise bei zunehmender Dunkelheit die Beleuchtungsstärke für das Objekt entsprechend reduziert werden, um einen gleichbleibenden Helligkeitskontrast zum Hintergrund zu erreichen.

Ferner kann auch ansprechend auf ein Erkennen eines überholenden Fahrzeugs, dem überholenden Fahrzeug im Schritt des Zuordnens ein Beleuchtungsbereich mit einer angepassten Beleuchtungsstärke, insbesondere einer gegenüber einer Grundbeleuchtungsstärke der Beleuchtungsszene reduzierte Beleuchtungsstärke zugeordnet werden. Unter einem überholenden Fahrzeug kann ein Fahrzeug verstanden werden, das mit einer (beispielsweise positiven) Differenzgeschwindigkeit an dem eigenen Fahrzeug vorbeifährt. Wenn das überholende Fahrzeug und dessen Fahrer dabei in von dem Lichtkegel beispielsweise des Fernlichts angestrahlt wird, wird der Fahrer des überholenden Fahrzeugs stark geblendet. Um das zu verhindern kann das Fahrzeug und Flächen, die direkt den Lichtkegel auf das Fahrzeug und den Fahrer lenken mit einer geringeren Intensität angestrahlt werden. Dadurch kann ebenso der Schlagschatten des überholenden Fahrzeugs weniger ausgeprägt sein und so eine weitere Irritation des Fahrers des überholenden Fahrzeugs vermieden werden. Davon nicht betroffene Bereiche können weiterhin mit der Grundbeleuchtungsstärke angestrahlt werden.

In einer zusätzlichen Ausführungsform der vorliegenden Erfindung kann ansprechend auf ein Erkennen eines Fahrzeugs mit hoher Fahrerposition, dem Fahrzeug mit hoher Fahrerposition im Schritt des Zuordnens ein Beleuchtungsbereich mit einer angepassten Hell-Dunkel-Grenze, insbesondere einer gegenüber einer Hell-Dunkel-Grenze der Beleuchtungsszene (beispielsweise räumlich) erhöhten Hell-Dunkel-Grenze zugeordnet werden, und/oder ansprechend auf ein Erkennen eines Fahrzeugs mit niedriger Fahrerposition, dem Fahrzeug mit niedriger Fahrerposition im Schritt des Zuordnens ein Beleuchtungsbereich mit einer angepassten Hell-Dunkel-Grenze, insbesondere einer gegenüber einer Hell-Dunkel-Grenze der Beleuchtungsszene (beispielsweise räumlich) abgesenkten Hell-Dunkel-Grenze zugeordnet werden. Ein Fahrzeug mit einer hohen Fahrerposition kann einen Fahrerplatz mit einem großen Abstand zur Fahrbahn aufweisen, ein Fahrzeug mit einer niedrigen Fahrerposition kann einen Fahrerplatz mit einem kleinen Abstand zur Fahrbahn aufweisen. Beispielsweise kann ein Fahrzeug mit hoher Fahrerposition ein LKW oder Bus sein. Ein Fahrzeug mit einer niedrigen Fahrerposition kann beispielsweise ein Sportwagen, ein Motorrad oder ein Liegerad sein. Unter einer Hell- Dunkel- Grenze kann eine Schattengrenze verstanden werden. Die Hell-Dunkel-Grenze trennt einen von einer Lichtquelle beleuchteten Bereich oder den Lichtkegel von einem direkt daran angrenzenden, nicht von der Lichtquelle beleuchteten Bereich. Im betrachteten Fall ist die Hell-Dunkel-Grenze als die obere, fahrbahnabgewandte Grenze zwischen einem Scheinwerferstrahl und einem nicht vom Scheinwerferstrahl beleuchteten Bereich zu verstehen. Beispielsweise kann ein LKW mit einer höheren Hell-Dunkel-Grenze angestrahlt werden ohne den Fahrer zu blenden, als ein PKW oder eine Limousine. Der PKW oder die Limousine kann mit einer höheren Hell-Dunkel-Grenze angestrahlt werden ohne den Fahrer zu blenden, als beispielsweise ein Motorrad oder ein Liegerad.

Die vorliegende Erfindung schafft ferner ein Steuergerät, das ausgebildet ist, um die Schritte des erfindungsgemäßen Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:
- Fig. 1: ein Ablaufdiagramm eines Verfahrens zum Beeinflussen einer Beleuchtungsszene vor einem Fahrzeug gemäß einem Ausführungsbeispiel der vorliegenden Erfindung;
- Fig. 2: ein Blockschaltbild eines Steuergeräts zum Beeinflussen einer Beleuchtungsszene vor einem Fahrzeug gemäß einem Ausführungsbeispiel der vorliegenden Erfindung;
- Fig. 3: eine Darstellung mehrerer Beispiele des Beeinflussens einer Beleuchtungsszene vor einem Fahrzeug gemäß Ausführungsbeispielen der vorliegenden Erfindung;
- Fig. 4: eine Darstellung einer Anpassung einer Beleuchtungsszene vor einem Fahrzeug durch ein Verfahren gemäß einem Ausführungsbeispiel der vorliegenden Erfindung; und
- Fig. 5: eine weitere Darstellung einer Anpassung einer weiteren Beleuchtungsszene vor einem Fahrzeug durch ein Verfahren gemäß einem Ausführungsbeispiel der vorliegenden Erfindung.

In der nachfolgenden Beschreibung von günstigen Ausführungsbeispielen der vorliegenden Erfindung werden für die in den verschiedenen Figuren dargestellten und ähnlich wirkenden Elementen gleiche oder ähnliche Bezugszeichen verwendet, wobei auf eine wiederholte Beschreibung dieser Elemente verzichtet wird.

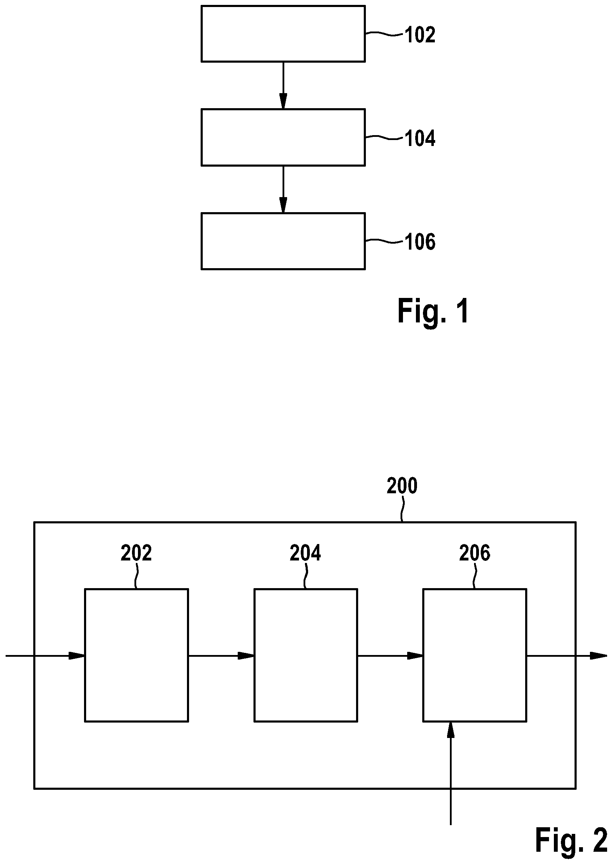

Fig. 1 zeigt ein Ablaufdiagramm eines Verfahrens zum Beeinflussen einer Beleuchtungsszene vor einem Fahrzeug gemäß einem Ausführungsbeispiel der vorliegenden Erfindung. Das Verfahren weist einen Schritt 102 des Einlesens, einen Schritt 104 des Zuordnens sowie einen Schritt 106 des Anpassens auf. Im Schritt 102 wird eine Information über eine Position und eine Klasse eines erkannten Objekts vor dem Fahrzeug eingelesen. Die Information kann von einem Kamerabasierten Erkennungssystem geliefert werden. Die Information kann auch von einer anderen Objekterkennungseinrichtung geliefert werden. Im Schritt 104 wird dem erkannten Objekt oder den erkannten Objekten je ein Beleuchtungsbereich und eine Beleuchtungsstärke zugeordnet. Der Beleuchtungsbereich wird in Abhängigkeit von der Position des Objekts zugeordnet. Die Beleuchtungsstärke des Beleuchtungsbereichs wird in Abhängigkeit von der Klasse des Objekts im Beleuchtungsbereich zugeordnet. Der Beleuchtungsbereich kann auf einen Teilbereich des Objekts beschränkt sein. Die Beleuchtungsstärke kann abhängig von einem Vergleich einer mit der Klasse festgelegten Soll-Beleuchtungsstärke zugeordnet werden. Im Schritt 106 wird die Beleuchtungsszene mit der oder den zuvor zugeordneten Beleuchtungsbereichen und Beleuchtungsstärken ergänzt oder abgeändert und in den Beleuchtungsbereichen ein Lichtstrom gegenüber einem Grundlichtstrom der Beleuchtungsszene erhöht oder verringert.

Fig. 2 zeigt ein Blockschaltbild eines Steuergeräts zum Beeinflussen einer Beleuchtungsszene vor einem Fahrzeug gemäß einem Ausführungsbeispiel der vorliegenden Erfindung. Das Steuergerät 200 weist eine Einrichtung zum Einlesen 202, eine Einrichtung zum Zuordnen 204 sowie eine Einrichtung zum Anpassen 206 auf. Die Einrichtung 202 zum Einlesen liest eine Information über eine Position und eine Klasse eines erkannten Objekts vor dem Fahrzeug ein. Die Einrichtung 204 zum Zuordnen ordnet dem erkannten Objekt oder den erkannten Objekten je ein Beleuchtungsbereich und eine Beleuchtungsstärke zu. Der Beleuchtungsbereich wird in Abhängigkeit von der Position des Objekts zugeordnet. Die Beleuchtungsstärke des Beleuchtungsbereichs wird in Abhängigkeit von der Klasse des Objekts im Beleuchtungsbereich zugeordnet. Die Einrichtung 206 zum Anpassen liest eine Beleuchtungsszene ein und passt die Beleuchtungsszene mit der oder den zuvor zugeordneten Beleuchtungsbereichen und Beleuchtungsstärken an. Die angepasste Beleuchtungsszene wird ausgegeben.

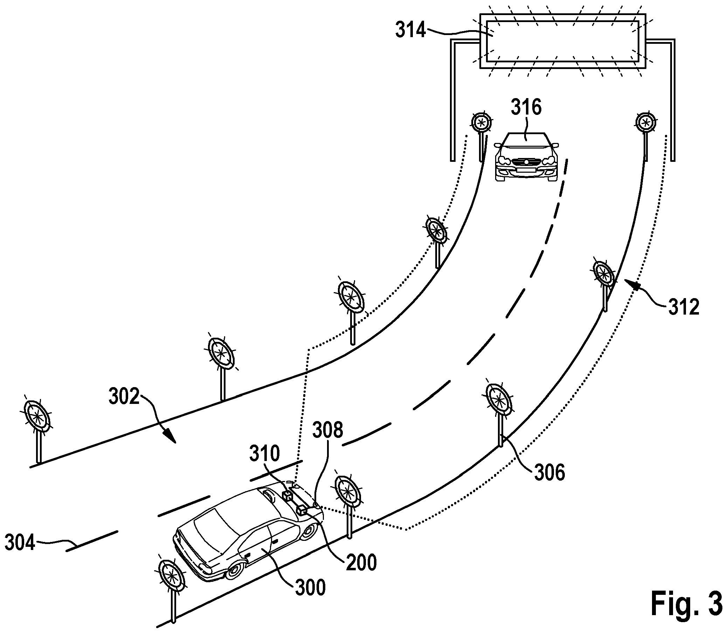

Fig. 3 zeigt eine Darstellung mehrerer Beispiele des Beeinflussens einer Beleuchtungsszene vor einem Fahrzeug gemäß Ausführungsbeispielen der vorliegenden Erfindung. Ein Fahrzeug 300 fährt auf einer Straße 302. Die Straße 302 weist in einem Bereich in dem sich das Fahrzeug 300 befindet einen geraden Abschnitt auf. In Fahrtrichtung des Fahrzeugs 300 anschließend an den geraden Abschnitt weist die Straße 302 eine Linkskurve auf. Die Straße 302 weist eine Fahrbahnmarkierung 304 und Leiteinrichtungen 306 auf. Die Fahrbahnmarkierung 304 ist als unterbrochene Linie in der Mitte der Straße 302 ausgeführt. Die Leiteinrichtungen 306 sind als Leitpfosten 306 mit Reflektoren ausgeführt und sind paarweise in regelmäßigen Abständen rechts und links der Straße 302 angeordnet. Das Fahrzeug 300 weist ein Steuergerät 200 zum Beeinflussen einer Beleuchtungsszene vor einem Fahrzeug und zwei adaptive Frontscheinwerfer 308 auf. Das Fahrzeug 300 erfasst mit einer Erfassungseinrichtung 310 zumindest ein Fahrzeugumfeld vor dem Fahrzeug 300. Die Erfassungseinrichtung 310 erkennt eine Position von Objekten im Fahrzeugumfeld und ordnet die Objekte in hinterlegte Klassen ein. Das Steuergerät 200 kann auf die Positionen und Klassen der erkannten Objekte zugreifen. Die Erfassungseinrichtung 310 erfasst weiterhin einen Straßenverlauf vor dem Fahrzeug 300. Das Steuergerät 200 kann ebenfalls auf den erfassten Straßenverlauf zugreifen. Aufgrund des Straßenverlaufs ordnet das Steuergerät 200 der Straße 302 vor dem Fahrzeug einen Fahrbahnbeleuchtungsbereich 312 und eine Fahrbahnbeleuchtungsstärke zu. Der Fahrbahnbeleuchtungsbereich 312 beinhaltet den Straßenverlauf vor dem Fahrzeug 300 und beidseitig einen Randbereich. Damit weist der Fahrbahnbeleuchtungsbereich 312 eine entsprechend der Linkskurve der Straße 302 gebogene Form auf. Das Steuergerät 200 passt eine fahrsituationsbedingte Beleuchtungsszene mit dem Fahrbahnbeleuchtungsbereich 312 und der zugehörigen Fahrbahnbeleuchtungsstärke an. Hier wird besonders der Randbereich, in dem sich die Leitpfosten 306 befinden heller erleuchtet, um Gefahren frühzeitig erkennen zu können. Dadurch werfen die Reflektoren an den Leitpfosten 306 verstärkt Licht von den Scheinwerfern 308 zurück zum Fahrzeug 300. Übersteigt das zurückgeworfene Licht einen vorbestimmten, umgebungshelligkeitsabhängigen Schwellenwert, so reduziert das Steuergerät 200 die Beleuchtung der Leitpfosten 306 bis der Schwellenwert nicht mehr überschritten wird. Die Leitpfosten können also als Beleuchtungsbereich angesehen werden, für die die Beleuchtungsstärke angepasst, insbesondere reduziert wird. Am Ende der Linkskurve befindet sich ein großes reflektierendes Schild 314 in Form einer Schilderbrücke. Da der Fahrbahnbeleuchtungsbereich 312 bereits das Schild 314 einschließt wird viel Licht vom Schild 314 zum Fahrzeug 300 zurückgeworfen. Auch hier reduziert das Steuergerät 200 die Lichtmenge in einem Bereich, in dem sich das Schild befindet, bis der Schwellenwert in diesem Bereich nicht mehr überschritten wird, um eine Blendung zu reduzieren oder zu verhindern. In der Linkskurve befindet sich ein entgegenkommendes Fahrzeug 316 und wird bereits vom Fahrbahnbeleuchtungsbereich 312 eingeschlossen, so dass die Scheinwerfer 308 das Fahrzeug 316 beleuchten. Aufgrund einer Einordnung des Fahrzeugs 316 in eine Klasse, wie PKW oder LKW wird im Steuergerät 200 eine Hell-Dunkel-Grenze in einem Bereich um das Fahrzeug 316 so angepasst, dass der Fahrer des Fahrzeugs 316 von den Scheinwerfern 308 nicht oder nur in akzeptablem Rahmen geblendet wird. Dabei wird eine Höhe der Hell-Dunkel-Grenze entsprechend einer hinterlegten Sitzhöhe der Klasse des Fahrzeugs 316 über der Fahrbahn 302 zugeordnet.

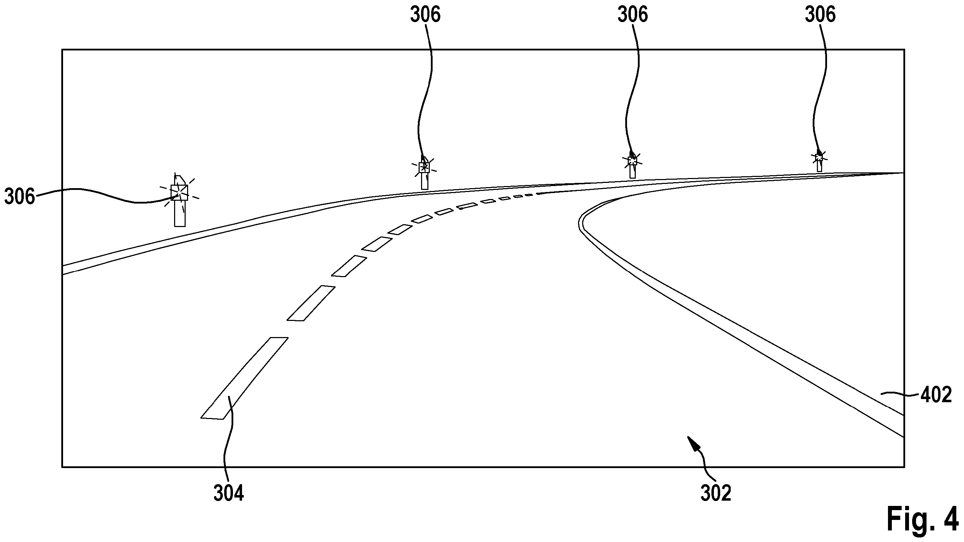

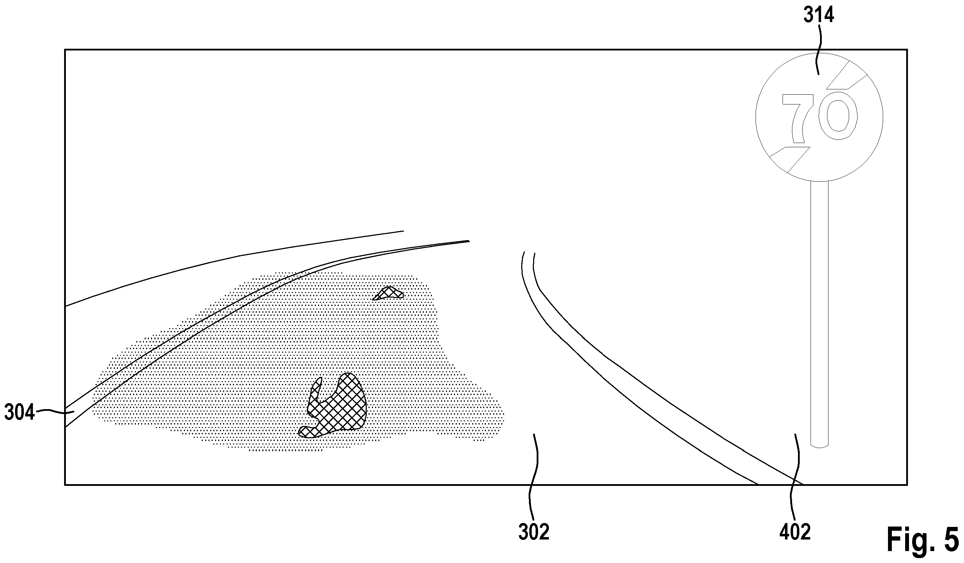

Die Figuren 4 und 5 zeigen eine Darstellungen von Anpassungen einer Beleuchtungsszene vor einem Fahrzeug durch ein Verfahren gemäß einem Ausführungsbeispiel der vorliegenden Erfindung. Aufbauend auf eine Lichtsteuerung auf Basis eines geschätzten Vertikal- und Horizontalwinkels und/oder Winkelbereichs eines regelrelevanten Objektes bzw. auf Basis einer geschätzten Entfernung ist eine merkmalsbasierte Lichtsteuerung gezeigt. Für eine videobasierte Lichtsteuerung im Fahrzeug ist es neben den oben genannten Merkmalen von Interesse, den Typ der detektierten Lichtobjekte oder Objekte vor dem Fahrzeug genauer zu kennen. Dadurch ist es möglich, in speziellen Situationen, wie bei Straßenbeleuchtung, bei Verkehrsschildern usw., bzw. bei definierten Fahrzeugklassen, wie PKW, LKW, Motorrad, Fahrrad usw., die Lichtsteuerung entsprechend zu optimieren. Als zu optimierendes Kriterium soll hier nicht nur die Lichtverteilung selbst verstanden werden, sondern beispielsweise auch mögliche positive und negative Entprellzeiten und/oder die einzustellenden vertikalen Verstellwinkel bzw. horizontalen Schwenkwinkel insbesondere in Teilbereichen der auszuleuchtenden Beleuchtungsszene. Die Ausnutzung der Informationen über den konkreten Typ eines klassifizierten Objektes, speziell klassifizierter Infrastruktur kann bei der Verwendung von günstigerweise getrennt ansteuerbaren Scheinwerfern bzw. Scheinwerfermodulen z.B. LED-Segmente, genutzt werden um eine situative, optimale Ausleuchtung der Fahrbahn inklusive der Infrastruktur zu gewährleisten.

Durch die Ausnutzung dieser Zusatzinformation ist es z.B. möglich, Verkehrszeichen und/oder Hinweiszeichen bewusst anzuleuchten bzw. basierend auf zusätzlichen Merkmalen wie vorzugsweise der Größe des Zeichens oder einer geschätzten Reflektivität die aktive Beleuchtung zu unterbinden oder zu verringern, um eine mögliche Eigenblendung zu verhindern. Nach Passieren z.B. eines entsprechenden Schildes kann ohne Entprellzeit wieder die vollständige Ausleuchtung genutzt werden.

Entsprechend ist es möglich, bei einem klassifiziertem LKW-Scheinwerferpaar, die Hell-Dunkel-Kante bei vorzugsweise einer gleitenden Leuchtweitenregelung höher anzulegen und einen größeren Verstellwinkel zu nutzen als z.B. bei einem PKW, wodurch der Bereich um den LKW für den Fahrer des Fahrzeugs besser ausgeleuchtet wird, ohne den Fahrer des LKW zu blenden und dadurch eine höhere Reichweite des Scheinwerferlichts erreicht wird.

Wird ein überholendes Fahrzeug klassifiziert, kann beispielsweise bei Verwendung von günstigerweise getrennt ansteuerbaren Scheinwerfern ein optimiertes Ausschalten bzw. Verändern der Ausleuchtcharakteristik realisiert werden. Damit kann sowohl dem Fahrer als auch dem Fahrer des überholenden Fahrzeuges möglichst lange die Ausleuchtung des nicht zwingend zu entblendenden Bereiches gewährleistet werden.

Sind Leitpfosten klassifiziert, kann die Lichtverteilung so eingestellt werden, dass nur der Fahrbahnbereich inklusive des Randbereiches ausgeleuchtet wird, wodurch z.B. Personen am Fahrbahnrand oder Fahrradfahrer nicht geblendet werden. Auf Basis der Leitpfosten lässt sich ein intelligentes "vorauseilendes" dynamisches Kurvenlicht ansteuern, bei dem beispielsweise noch keine Einfahrt des Fahrzeugs in die Kurve erfolgt ist und dennoch die Scheinwerfer des Fahrzeugs dem Straßenverlauf folgend geschwenkt werden können.

Mögliche Klassifikationsklassen oder Unterscheidungsmerkmale für die oben genannten Lichtobjekte sind beispielsweise ein singulärer Scheinwerfer und/oder eine Rückleuchte, ein Scheinwerferpaar und/oder Rückleuchtenpaar eines PKW, ein Scheinwerferpaar und/oder Rückleuchtenpaar eines LKW, ein überholendes Fahrzeug, Positionsleuchten eines Fahrzeugs, Straßenlaternen oder Straßenbeleuchtung, Verkehrszeichen oder Wechselverkehrszeichen, Leitpfosten, Bodenreflexion, Reflexionen an Leitplanken u.ä..

Fig. 4 zeigt reflektierende Leitpfosten 306, die den gekrümmten Straßenverlauf markieren. Eine Straße 302 vor einem Fahrzeug verläuft in einer Rechtskurve. Mit zunehmendem Abstand vor dem Fahrzeug wird eine Beleuchtungsstärke geringer. Zwischen dem zweiten Leitpfosten 306 und dem dritten Leitpfosten 306 ist eine Straßenmarkierung 304 nicht mehr erkennbar. Ein rechtes Bankett 402 ist bereits bei dem ersten Leitpfosten 306 nicht mehr erkennbar. Um die Straße 302 besser auszuleuchten wird entlang der reflektierenden Leitpfosten 306 ein Fahrbahnbeleuchtungsbereich definiert, und als Attribut mit einer Fahrbahnbeleuchtungsstärke ausgestattet. Daraufhin werden die Scheinwerfer des Fahrzeugs so beeinflusst, dass der Fahrbahnbeleuchtungsbereich ausgeleuchtet wird. Dadurch wird die Straße 302 für einen Fahrer des Fahrzeugs weiter vor dem Fahrzeug sichtbar. Diese Lichtsteuerung erfolgt unabhängig von Lenkbefehlen des Fahrers und/oder wirkenden Querbeschleunigungen. Der Fahrbahnbeleuchtungsbereich wird basierend auf einem vor dem Fahrzeug erkannten Fahrbahnverlauf ausgerichtet.

Fig. 5 zeigt ebenfalls eine Straße 402 mit Fahrbahnmarkierung 304. Die Straße 402 verläuft in einer Rechtskurve vor dem Fahrzeug und wird mit zunehmendem Abstand vor dem Fahrzeug weniger ausgeleuchtet. Am rechten Fahrbahnrand ist ein Verkehrszeichen 314 erkennbar. Die Lichtsteuerung des Fahrzeugs verhindert ein Anleuchten des Verkehrsschilds 314 mit voller Leuchtkraft um eine Blendung des Fahrers zu reduzieren oder zu verhindern. Ein Nahbereich vor dem Fahrzeug wird aufgrund von Schäden der Straße 302 stärker ausgeleuchtet. Die Lichtsteuerung hat damit auf eine Gefahrenklasse der Fahrbahnschäden reagiert und hebt die Schäden mit einer hohen Beleuchtungsintensität hervor. Ein rechtes Bankett 402 ist dagegen als ungefährlich erkannt und wird nur mit einer Grundlichtstärke angestrahlt.

## Patentansprüche

1. Verfahren zum Beeinflussen einer Beleuchtungsszene vor einem Fahrzeug (300), wobei das Verfahren die folgenden Schritte umfasst:
Einlesen (102) einer Information über eine Position zumindest eines erkannten Objekts und über eine Klasse des erkannten Objekts;
Zuordnen (104) eines auf die Position des Objekts bezogenen Beleuchtungsbereichs (312) mit einer auf die Klasse des Objekts bezogenen Beleuchtungsstärke für den Beleuchtungsbereich; und
Anpassen (106) der Beleuchtungsszene unter Berücksichtigung des Beleuchtungsbereichs und der zugehörigen Beleuchtungsstärke,
**dadurch gekennzeichnet, dass**
im Schritt (104) des Zuordnens eine auf die Klasse des Objekts bezogene Beleuchtungsdauer zugeordnet wird, und im Schritt (106) des Anpassens die Beleuchtungsszene ferner unter Berücksichtigung der Beleuchtungsdauer angepasst wird, und wobei ansprechend auf eine Erkennung von Wild vor dem Fahrzeug, insbesondere am Fahrbahnrand eine Stelle, an der das Wild erkannt worden ist, länger ausgeleuchtet wird, als sich das Wild an der Stelle befindet, und/oder ansprechend auf eine Erkennung eines Verkehrsschilds, eine Stelle an der ein Verkehrsschild erkannt worden ist, länger ausgeleuchtet wird, obwohl das Verkehrsschild kurzzeitig verdeckt ist und daher gerade nicht sichtbar ist.

2. Verfahren gemäß Anspruch 1, bei dem im Schritt (102) des Einlesens eine Größe des bekannten Objekts eingelesen wird, und im Schritt des Zuordnens der Beleuchtungsbereich (312) ferner unter Berücksichtigung der Größe des Objekts zugeordnet wird.

3. Verfahren gemäß einem der vorangegangenen Ansprüche, bei dem im Schritt des Einlesens (102) ferner ein vor dem Fahrzeug (300) erkannter Fahrbahnverlauf eingelesen wird, und im Schritt (104) des Zuordnens ein Fahrbahnbeleuchtungsbereich (312) und eine Fahrbahnbeleuchtungsstärke auf den Fahrbahnverlauf ausgerichtet werden, wobei die Fahrbahnbeleuchtungsstärke insbesondere für einen Randbereich (402) des Fahrbahnbeleuchtungsbereichs (312) gegenüber einer Grundbeleuchtungsstärke der Beleuchtungsszene erhöht wird.

4. Verfahren gemäß einem der vorangegangenen Ansprüche, bei dem ansprechend auf ein Erkennen eines retroreflektierenden Objekts (306, 314) vor dem Fahrzeug (300), dem retroreflektierenden Objekt im Schritt (104) des Zuordnens ein Beleuchtungsbereich (312) mit einer angepassten Beleuchtungsstärke, insbesondere gegenüber einer Grundbeleuchtungsstärke der Beleuchtungsszene reduzierten Beleuchtungsstärke zugeordnet wird, wobei die Grundbeleuchtungsstärke eine in der Beleuchtungsszene hinterlegte Beleuchtungsstärke für den jeweiligen Bereich repräsentiert.

5. Verfahren gemäß einem der vorangegangenen Ansprüche, bei dem ansprechend auf ein Erkennen eines überholenden Fahrzeugs, dem überholenden Fahrzeug im Schritt (104) des Zuordnens ein Beleuchtungsbereich (312) mit einer angepassten Beleuchtungsstärke insbesondere gegenüber einer Grundbeleuchtungsstärke der Beleuchtungsszene reduzierten Beleuchtungsstärke zugeordnet wird.

6. Verfahren gemäß einem der vorangegangenen Ansprüche, bei dem ansprechend auf ein Erkennen eines Fahrzeugs (316) mit hoher Fahrerposition, dem Fahrzeug (316) mit hoher Fahrerposition im Schritt (104) des Zuordnens ein Beleuchtungsbereich (312) mit einer angepassten Hell-Dunkel-Grenze insbesondere einer gegenüber einer Hell-Dunkel-Grenze der Beleuchtungsszene erhöhten Hell-Dunkel-Grenze zugeordnet wird, und/oder bei dem ansprechend auf ein Erkennen eines Fahrzeugs (316) mit niedriger Fahrerposition, dem Fahrzeug (316) mit niedriger Fahrerposition im Schritt des Zuordnens ein Beleuchtungsbereich (312) mit einer angepassten Hell-Dunkel-Grenze insbesondere einer gegenüber einer Hell-Dunkel-Grenze der Beleuchtungsszene abgesenkten Hell-Dunkel-Grenze zugeordnet wird.

7. Steuergerät (200), zum Beeinflussen einer Beleuchtungsszene vor einem Fahrzeug (300), wobei das Steuergerät die folgenden Merkmale aufweist:
eine Einrichtung (202) zum Einlesen einer Information über eine Position zumindest eines erkannten Objekts und über eine Klasse des erkannten Objekts;
eine Einrichtung (204) zum Zuordnen eines auf die Position des Objekts bezogenen Beleuchtungsbereichs (312) mit einer auf die Klasse des Objekts bezogenen Beleuchtungsstärke für den Beleuchtungsbereich; und
eine Einrichtung (206) zum Anpassen der Beleuchtungsszene unter Berücksichtigung des Beleuchtungsbereichs und der zugehörigen Beleuchtungsstärke,
**dadurch gekennzeichnet, dass**
Einrichtung (204) zum Zuordnen ausgebildet ist, um eine auf die Klasse des Objekts bezogene Beleuchtungsdauer zuzuordnen, und wobei eine Einrichtung (206) zum Anpassen ausgebildet ist, um die Beleuchtungsszene ferner unter Berücksichtigung der Beleuchtungsdauer anzupassen und wobei Einrichtung (206) zum Anpassen ferner ausgebildet ist, ansprechend auf eine Erkennung von Wild vor dem Fahrzeug, insbesondere am Fahrbahnrand eine Stelle, an der das Wild erkannt worden, ist länger auszuleuchten, als sich das Wild an der Stelle befindet, und/oder ansprechend auf eine Erkennung eines Verkehrsschilds, eine Stelle an der ein Verkehrsschild erkannt worden ist, länger ausgeleuchtet wird, obwohl das Verkehrsschild kurzzeitig verdeckt ist und daher gerade nicht sichtbar ist.

8. Computer-Programmprodukt mit Programmcode zur Durchführung des Verfahrens nach einem der Ansprüche 1 bis 6, wenn das Programm auf einem Steuergerät nach Anspruch 7 ausgeführt wird.

## Claims

1. Method for influencing a lighting scene in front of a vehicle (300), wherein the method comprises the following steps:
reading-in (102) an item of information about a position of at least one identified object and about a class of the identified object;
assigning (104) a lighting region (312), which is related to the position of the object, a lighting intensity, which is related to the class of the object, for the lighting region; and
adapting (106) the lighting scene taking into account the lighting region and the associated lighting intensity,
**characterized in that**
a lighting period, which is related to the class of the object, is assigned in the assigning step (104), and the lighting scene is further adapted taking into account the lighting period in the adapting step (106), and wherein, in response to a deer being identified in front of the vehicle, in particular at the roadside, a point at which the deer has been identified is illuminated for longer than the deer is at the point, and/or, in response to a traffic sign being identified, a point at which a traffic sign has been identified is illuminated for longer, even though the traffic sign is briefly hidden and therefore not even visible.

2. Method according to Claim 1, in which a size of the known object is read-in in the reading-in step (102), and the lighting region (312) is further assigned taking into account the size of the object in the assigning step.

3. Method according to either of the preceding claims, in which a road profile, which is identified in front of the vehicle (300), is further read-in in the reading-in step (102), and a road lighting region (312) and a road lighting intensity are matched to the road profile in the assigning step (104), wherein the road lighting intensity is increased, in particular, for an edge region (402) of the road lighting region (312) in relation to a basic lighting intensity of the lighting scene.

4. Method according to one of the preceding claims, in which, in response to a retro-reflecting object (306, 314) being identified in front of the vehicle (300), a lighting region (312) with an adapted lighting intensity, in particular a lighting intensity which is reduced in relation to a basic lighting intensity of the lighting scene, is assigned to the retro-reflecting object in the assigning step (104), wherein the basic lighting intensity represents a lighting intensity for the respective region, which lighting intensity is stored in the lighting scene.

5. Method according to one of the preceding claims, in which, in response to an overtaking vehicle being identified, a lighting region (312) with an adapted lighting intensity, in particular a lighting intensity which is reduced in relation to a basic lighting intensity of the lighting scene, is assigned to the overtaking vehicle in the assigning step (104).

6. Method according to one of the preceding claims, in which, in response to a vehicle (316) with a high driver position being identified, a lighting region (312) with an adapted light/dark boundary, in particular a light/dark boundary which is increased in relation to a light/dark boundary of the lighting scene, is assigned to the vehicle (316) with a high driver position in the assigning step (104), and/or in which, in response to a vehicle (316) with a low driver position being identified, a lighting region (312) with an adapted light/dark boundary, in particular a light/dark boundary which is lowered in relation to a light/dark boundary of the lighting scene, is assigned to the vehicle (316) with a low driver position in the assigning step.

7. Controller (200) for influencing a lighting scene in front of a vehicle (300), wherein the controller has the following features:
a device (202) for reading-in an item of information about a position of at least one identified object and about a class of the identified object;
a device (204) for assigning a lighting region (312), which is related to the position of the object, a lighting intensity, which is related to the class of the object, for the lighting region; and
a device (206) for adapting the lighting scene taking into account the lighting region and the associated light intensity,
**characterized in that**
the assigning device (204) is designed in order to assign a lighting period which is related to the class of the object, and wherein an adapting device (206) is designed in order to adapt the lighting scene further taking into account the lighting period, and wherein an adapting device (206) is further designed for, in response to a deer being identified in front of the vehicle, in particular at the roadside, a point at which the deer has been identified to be illuminated for longer than the deer is at the point, and/or for, in response to a traffic sign being identified, a point at which a traffic sign has been identified to be illuminated for longer, even though the traffic sign is briefly hidden and therefore not even visible.

8. Computer program product containing program code for carrying out the method according to one of Claims 1 to 6 when the program is run on a controller according to Claim 7.

## Revendications

1. Procédé destiné à influer sur une scène d'éclairage devant un véhicule (300), le procédé comprenant les étapes suivantes consistant à :
lire (102) une information concernant une position d'au moins un objet détecté et concernant une catégorie de l'objet détecté ;
attribuer (104) une zone d'éclairage (312) relative à la position de l'objet à une intensité d'éclairage relative à la catégorie de l'objet pour la zone d'éclairage ; et
adapter (106) la scène d'éclairage en tenant compte de la zone d'éclairage et de l'intensité d'éclairage associée,
**caractérisé en ce qu'**à l'étape d'attribution (104) une durée d'éclairage relative à la catégorie de l'objet est attribuée et à l'étape d'adaptation (106) la scène d'éclairage est en outre adaptée en tenant compte de la durée d'éclairage, et dans lequel, en réaction à une détection de gibier devant le véhicule, en particulier au bord de la route, un endroit où le gibier a été détecté est éclairé plus longtemps que la présence du gibier à cet endroit, et/ou en réaction à une détection d'un panneau routier, un endroit où un panneau routier a été détecté est éclairé plus longtemps bien que le panneau routier soit brièvement masqué et donc invisible à ce moment-là.

2. Procédé selon la revendication 1, dans lequel à l'étape de lecture (102), une taille de l'objet connu est lue, et à l'étape d'attribution, la zone d'éclairage (312) est en outre attribuée en tenant compte de la taille de l'objet.

3. Procédé selon l'une quelconque des revendications précédentes, dans lequel à l'étape de lecture (102), en outre un tracé de route détecté devant le véhicule (300) est lu, et à l'étape d'attribution (104), une zone d'éclairage de route (312) et une intensité d'éclairage de route sont alignées sur le tracé de route, l'intensité d'éclairage de route, en particulier pour une zone marginale (402) de la zone d'éclairage de route (312), étant augmentée par rapport à une intensité d'éclairage de base de la scène d'éclairage.

4. Procédé selon l'une quelconque des revendications précédentes, dans lequel, en réaction à une détection d'un objet rétroréfléchissant (306, 314) devant le véhicule (300), à l'étape d'attribution (104), une zone d'éclairage (312) d'une intensité d'éclairage adaptée est attribuée à l'objet rétroréfléchissant, en particulier une intensité d'éclairage réduite par rapport à une intensité d'éclairage de base de la scène d'éclairage, l'intensité d'éclairage de base représentant une intensité d'éclairage mémorisée dans la scène d'éclairage pour la zone respective.

5. Procédé selon l'une quelconque des revendications précédentes, dans lequel, en réaction à une détection d'un véhicule en dépassement, à l'étape d'attribution (104), une zone d'éclairage (312) d'une intensité d'éclairage adaptée est attribuée au véhicule en dépassement, en particulier une intensité d'éclairage réduite par rapport à une intensité d'éclairage de base de la scène d'éclairage.

6. Procédé selon l'une quelconque des revendications précédentes, dans lequel, en réaction à une détection d'un véhicule (316) à position de conducteur haute, à l'étape d'attribution (104), une zone d'éclairage (312) avec une limite clair-obscur adaptée est attribuée au véhicule (316) à position de conducteur haute, en particulier avec une limite clair-obscur augmentée par rapport à une limite clair-obscur de la scène d'éclairage, et/ou dans lequel, en réaction à une détection d'un véhicule (316) à position de conducteur basse, à l'étape d'attribution, une zone d'éclairage (312) avec une limite clair-obscur adaptée est attribuée au véhicule (316) à position de conducteur basse, en particulier avec une limite clair-obscur diminuée par rapport à une limite clair-obscur de la scène d'éclairage.

7. Unité de commande (200), destinée à influer sur une scène d'éclairage devant un véhicule (300), l'unité de commande présentant les particularités suivantes :
un dispositif (202) pour lire une information concernant une position d'au moins un objet détecté et concernant une catégorie de l'objet détecté ;
un dispositif (204) pour attribuer une zone d'éclairage (312) relative à la position de l'objet à une intensité d'éclairage relative à la catégorie de l'objet pour la zone d'éclairage ; et
un dispositif (206) pour adapter la scène d'éclairage en tenant compte de la zone d'éclairage et de l'intensité d'éclairage associée,
**caractérisée en ce que** le dispositif d'attribution (204) est réalisé pour attribuer une durée d'éclairage relative à la catégorie de l'objet, et dans laquelle un dispositif d'adaptation (206) est réalisé pour adapter la scène d'éclairage en outre en tenant compte de la durée d'éclairage, et dans laquelle le dispositif d'adaptation (206) est en outre réalisé, en réaction à une détection de gibier devant le véhicule, en particulier sur le bord de la route, pour éclairer un endroit où le gibier a été détecté plus longtemps que la présence du gibier à cet endroit, et/ou en réaction à une détection d'un panneau routier, pour éclairer un endroit où un panneau routier a été détecté plus longtemps bien que le panneau routier soit brièvement masqué et donc invisible à ce moment-là.

8. Produit de programme informatique avec du code programme pour effectuer le procédé selon l'une quelconque des revendications 1 à 6 lorsque le programme est exécuté sur une unité de commande selon la revendication 7.
